# EUROPÄISCHE PATENTSCHRIFT

(11) **EP 0 886 828 B1**
(45) Veröffentlichungstag und Bekanntmachung des Hinweises auf die Patenterteilung: **26.01.2000**
(21) Anmeldenummer: 97915344.2
(22) Anmeldetag: 12.03.1997
(51) Int. Cl.: G06F 13/42

(54) **VERFAHREN UND ANORDNUNG ZUM ÜBERTRAGEN VON SYSTEMSPEZIFISCHEN DATEN IN EINEM SYNCHRONEN MIKROPROZESSORSYSTEM**
PROCESS AND ARRANGEMENT FOR TRANSMITTING SYSTEM-SPECIFIC DATA IN A SYNCHRONOUS MICROPROCESSOR SYSTEM
PROCEDE ET DISPOSITIF POUR TRANSMETTRE DES DONNEES SPECIFIQUES DU SYSTEME DANS UN SYSTEME SYNCHRONE A MICROPROCESSEUR

(30) Priorität: 13.03.1996 DE 19609883
(43) Veröffentlichungstag der Anmeldung: 30.12.1998
(73) Patentinhaber: SIEMENS AKTIENGESELLSCHAFT, 80333 München (DE)
(72) Erfinder: EMMERICH, Norbert, D-46397 Bocholt (DE)
(86) Internationale Anmeldenummer: DE9700491
(87) Internationale Veröffentlichungsnummer: WO9734238

(56) Entgegenhaltungen:
- EP-A- 0 693 729
- DE-A- 4 307 449
- US-A- 4 958 277

## Beschreibung

Die Erfindung geht aus von einem Verfahren zum Übertragen von systemspezifischen Daten in einem synchronen Mikroprozessorsystem, bei dem in dem Mikroprozessorsystem zwischen einem Mikroprozessor und mindestens einer systemkompatiblen systemspezifischen Einrichtung sowie mindestens einer systeminkompatiblen systemspezifischen Einrichtung Adressierungsdaten und Nutzdaten übertragen werden, wobei für die systemkompatible Einrichtung bestimmte erste Adressierungsdaten und erste Nutzdaten auf einem Systembus übertragen werden, sowie von einer Anordnung zum Übertragen von systemspezifischen Daten in einem synchronen Mikroprozessorsystem mit einem Mikroprozessor und mindestens einer systemkompatiblen systemspezifischen Einrichtung sowie mindestens einer systeminkompatiblen systemspezifischen Einrichtung, zwischen denen Adressierungsdaten und Nutzdaten übertragen werden, und mit einem Systembus zwischen dem Mikroprozessor und der systemkompatiblen Einrichtung, auf dem für die systemkompatible Einrichtung bestimmte erste Adressierungsdaten und erste Nutzdaten übertragen werden.

Ein solches Verfahren beziehungsweise eine solche Anordnung sind der EP 0693 729 zu entnehmen. Hierbei sind für die systemkompatiblen und die systeminkompatiblen Einrichtungen jeweils zwei Taktleitungen vorgesehen.

Ein Mikroprozessorsystem ist die Funktionseinheit aus einem Mikroprozessor, einem Speicher und einer Steuerung für Peripheriegeräte, das jeweils in einer Vielzahl von technischen Geräten eingebaut ist. Der Mikroprozessor ist dabei eine universell verwendbare und frei programmierbare Funktionseinheit, die als Zentraleinheit (**C**entral **P**rocessing **U**nit CPU) bezeichnet wird und das vollständige Steuer- und Rechenwerk des Mikroprozessorsystems enthält und auf einem oder mehreren integrierten Schaltkreisen (Chip) untergebracht ist. Unter dem Begriff Peripheriegeräte werden solche Einrichtungen verstanden, die an den Mikroprozessor angeschlossen werden können. Man teilt die Peripherie des Mikroprozessors hinsichtlich ihrer Funktionen in eine Speicherperipherie, eine Ein/Ausgabeperipherie und eine Steuerperipherie ein. Die Speicherperipherie beinhaltet dabei Geräte, die zur Speicherung umfangreicher Datenbestände vorgesehen sind, z. B. Magnetschichtspeicher und Magnetblasenspeicher. Die Ein-/Ausgabeperipherie beinhaltet Funktionseinheiten für die Eingabe und Ausgabe von Daten, z. B. Drucker, Bildschirm etc. Die Steuerperipherie umfaßt Geräte, die die Ein-/Ausgabeperipherie mit Steuersignalen versorgen (Geräteverwaltung).

Das vorstehend angegebene Mikroprozessorsystem wird z.B. in Telekommunikationsendgeräten von drahtlosen Telekommunikationssystemen eingesetzt.

Drahtlose Telekommunikationssysteme der vorstehend bezeichneten Art sind Nachrichtensysteme mit einer Fernübertragungsstrecke zwischen einer Nachrichtenquelle und einer Nachrichtensenke zur Nachrichtenverarbeitung und Nachrichtenübertragung, bei denen
1) die Nachrichtenverarbeitung und Nachrichtenübertragung in einer bevorzugten Übertragungsrichtung (Simplex-Betrieb) oder in beiden Übertragungsrichtungen (Duplex-Betrieb) erfolgen kann,
2) die Nachrichtenverarbeitung analog oder digital ist,
3) die Nachrichtenübertragung über die Fernübertragungsstrekke drahtlos - z. B. nach diversen Funkstandards wie DECT, GSM, WACS oder PACS, IS-54, PHS, PDC etc. - ist (vgl. IEEE Communications Magazine, January 1995, Seiten 50 bis 57; D.D. Falconer et al:"Time Division Multiple Access Methods for Wireless Personal Communications").

"Nachricht" ist ein übergeordneter Begriff, der sowohl für den Sinngehalt (Information) als auch für die physikalische Repräsentation (Signal) steht. Signale können dabei z. B.
(1) Bilder
(2) gesprochene Wörter
(3) geschriebene Wörter
(4) verschlüsselte Wörter oder Bilder repräsentieren.

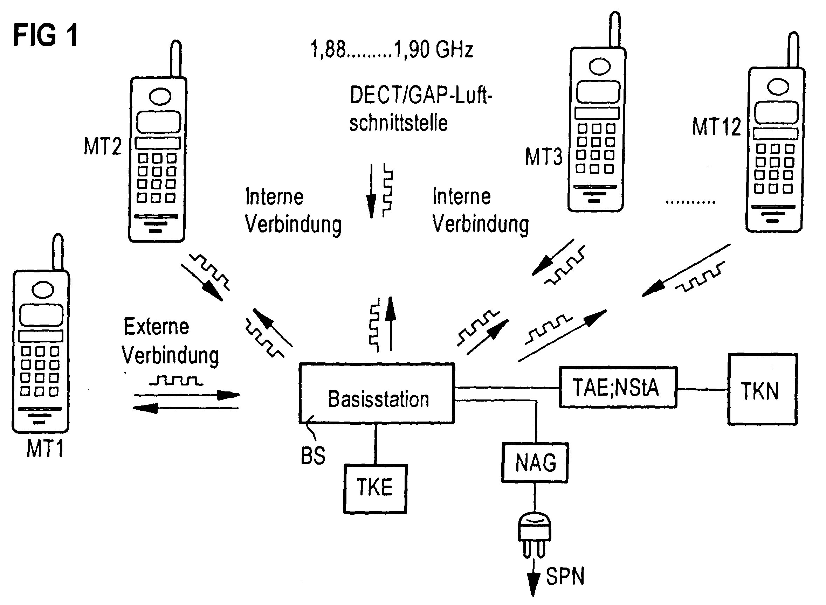

FIGUR 1 zeigt stellvertretend für die Vielzahl der drahtlosen Telekommunikationssysteme ein DECT/GAP-System, bei dem gemäß dem DECT/GAP-Standard (**D**igital **E**uropean **C**ordless **T**elecommunication; vgl. **(1):** Nachrichtentechnik Elektronik 42 (1992) Jan./Feb. Nr. 1, Berlin, DE; U. Pilger "Struktur des DECT-Standards", Seiten 23 bis 29 **in Verbindung mit** ETSI-Publikation ETS 300175-1...9, Okt. 1992; **(2):** Telcom Report 16 (1993), Nr. 1, J. H. Koch: "Digitaler Komfort für schnurlose Telekommunikation - DECT-Standard eröffnet neue Nutzungsgebiete", Seiten 26 und 27; **(3)**: tec 2/93 - Das technische Magazin von Ascom "Wege zur universellen mobilen Telekommunikation", Seiten 35 bis 42; Generic Access Profile; vgl. ETSI-Publikation prETS 300444, April 1995, Final Draft, ETSI, FR) an einer DECT/GAP-Basisstation BS über eine für den Frequenzbereich zwischen 1,88 und 1,90 Ghz ausgelegte DECT/GAP-Luftschnittstelle maximal 12 Verbindungen nach dem TDMA/FDMA/TDD-Verfahren (**T**ime **D**ivision **M**ultiple **A**ccess/**F**requency **D**ivision **M**ultiple **A**ccess/ **T**ime **D**ivision **D**uplex) parallel zu DECT/GAP-Mobilteilen MT1...MT12 aufgebaut werden. Die Zahl 12 ergibt sich aus einer Anzahl "k" von für den Duplexbetrieb eines DECT/GAP-Systems zur Verfügung stehenden Zeitschlitzen bzw. Telekommunikationskanälen (k = 12). Die Verbindungen können dabei intern und/oder extern sein. Bei einer internen Verbindung können zwei an der Basisstation BS registrierte Mobilteile, z. B. das Mobilteil MT2 und das Mobilteil MT3, miteinander kommunizieren. Für den Aufbau einer externen Verbindung ist die Basisstation BS mit einem Telekommunikationsnetz TKN, z. B. in leitungsgebundener Form über eine Telekommunikationsanschlußeinheit TAE bzw. eine Nebenstellenanlage NStA mit einem leitungsgebundenen Telekommunikationsnetz oder gemäß der WO 95/05040 in drahtloser Form als Repeaterstation mit einem übergeordneten Telekommunikationsnetz, verbunden. Bei der externen Verbindung kann man mit einem Mobilteil, z. B. mit dem Mobilteil MT1, über die Basisstation BS, die Telekommunikationsanschlußeinheit TAE bzw. Nebenstellenanlage NStA mit einem Teilnehmer in dem Telekommunikationsnetz TKN kommunizieren. Besitzt die Basisstation BS - wie im Fall des Gigaset 951 (Siemens Schnurlostelefon, vgl. Telcom Report 16, 1993, Heft 1, Seiten 26 und 27) - nur einen Anschluß zu der Telekommunikationsanschlußeinheit TAE bzw. der Nebenstellenanlage NStA, so kann nur eine externe Verbindung aufgebaut werden. Hat die Basisstation BS - wie im Fall des Gigaset 952 (Siemens Schnurlostelefon; vgl. Telcom Report 16, 1993, Heft 1, Seiten 26 und 27) - zwei Anschlüsse zu dem Telekommunikationsnetz TKN, so ist zusätzlich zu der externen Verbindung mit dem Mobilteil MT1 eine weitere externe Verbindung von einem an die Basisstation BS angeschlossenen leitungsgebundenen Telekommunikationsendgerät TKE möglich. Dabei ist es prinzipiell auch vorstellbar, daß ein zweites Mobilteil, z. B. das Mobilteil MT12 anstelle des Telekommunikationsendgerätes TKE den zweiten Anschluß für eine externe Verbindung nutzt. Die Mobilteile MT1...MT12 werden gemäß der nachveröffentlichten deutschen Patentanmeldung 195 45 762.5 im Handbetrieb (Normalbetrieb) mit einer Batterie oder einem Akkumulator und im Freisprechbetrieb in Verbindung mit einer an ein Spannungsnetz SPN angeschlossenen Ladestation betrieben. Die als schnurlose Klein-Vermittlungsanlage ausgebildete Basisstation wird über ein Netzanschlußgerät NAG an das Spannungsnetz SPN angeschlossen.

FIGUR 2 zeigt ausgehend von der Druckschrift Components 31 (1993), Heft 6, Seiten 215 bis 218; S. Althammer, D. Brückmann: "Hochoptimierte IC's für DECT-Schnurlostelefone" den prinzipiellen Schaltungsaufbau der Basisstation BS und des Mobilteils MT. Die Basisstation BS und das Mobilteil weisen danach ein Funkteil FKT mit einer zum Senden und Empfangen von Funksignalen zugeordneten Antenne ANT, eine Signalverarbeitungseinrichtung SVE und eine Zentrale Steuerung ZST auf, die in der dargestellten Weise miteinander verbunden sind. In dem Funkteil FKT sind im wesentlichen die bekannten Einrichtungen wie Sender SE, Empfänger EM und Synthesizer SYN enthalten. In der Signalverarbeitungseinrichtung SVE ist unter anderem eine Codier-/Decodiereinrichtung CODEC enthalten. Die Zentrale Steuerung ZST weist sowohl für die Basisstation BS als auch für das Mobilteil MT einen Mikroprozessor µP mit einem nach dem OSI/ISO-Schichtenmodell aufgebauten Programmmodul PGM, ein Signalsteuerungsteil SST und einen digitalen Signalprozessor DSP auf, die in der dargestellten Weise miteinander verbunden sind. Von den im Schichtenmodell definierten Schichten sind nur die unmittelbar für die Basisstation BS und das Mobilteil MT wesentlichen ersten vier Schichten dargestellt. Das Signalsteuerungsteil SST ist in der Basisstation BS als **T**ime **S**witch **C**ontroller TSC und in dem Mobilteil MT als **B**urst **M**ode **C**ontroller BMC ausgebildet. Der wesentliche Unterschied zwischen den beiden Signalsteuerungsteilen TSC, BMC besteht darin, daß der basisstationsspezifische Signalsteuerungsteil TSC gegenüber dem mobilteilspezifischen Signalsteuerungsteil BMC zusätzlich Vermittlungsfunktionen (Switch-Funktionen) übernimmt. Der Mikroprozessor µP ist - gemäß der eingangs angegebenen Definition - Bestandteil eines Mikroprozessorsystems.

Die prinzipielle Funktionsweise der vorstehend aufgeführten Schaltungseinheiten ist beispielsweise in der vorstehend zitierten Druckschrift Components 31 (1993), Heft 6, Seiten 215 bis 218 beschrieben.

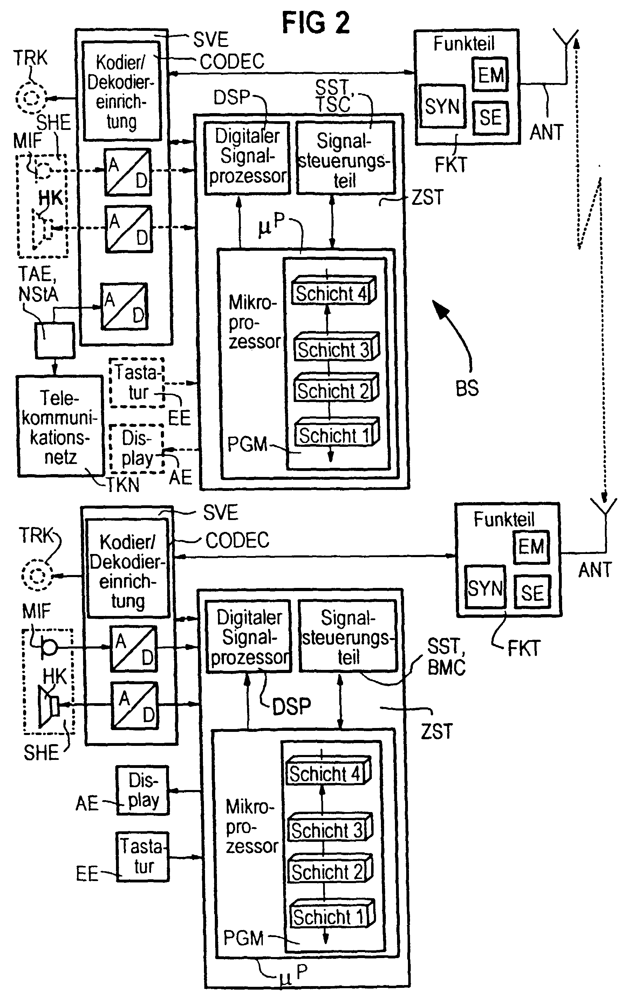

Der beschriebene Schaltungsaufbau nach FIGUR 2 wird bei der Basisstation BS und dem Mobilteil MT gemäß deren Funktion in dem DECT/GAP-System nach FIGUR 1 durch zusätzliche Funktionseinheiten ergänzt.

Die Basisstation BS ist über die Signalverarbeitungseinrichtung SVE und der Telekommunikationsanschlußeinheit TAE bzw. der Nebenstellenanlage NStA mit dem Telekommunikationsnetz TKN verbunden. Als Option kann die Basisstation BS noch eine Bedienoberfläche aufweisen (in FIGUR 2 gestrichelt eingezeichnete Funktionseinheiten), die z. B. aus einer als Tastatur ausgebildeten Eingabeeinrichtung EE, einer als Display ausgebildeten Anzeigeeinrichtung AE, eine als Handapparat mit Mikrofon MIF und Hörkapsel HK ausgebildeten Sprech-/Höreinrichtung SHE sowie einer Tonrufklingel TRK besteht.

Das Mobilteil MT weist die bei der Basisstation BS als Option mögliche Bedienoberfläche mit den zu dieser Bedienoberfläche gehörenden vorstehend beschriebenen Bedienelementen auf.

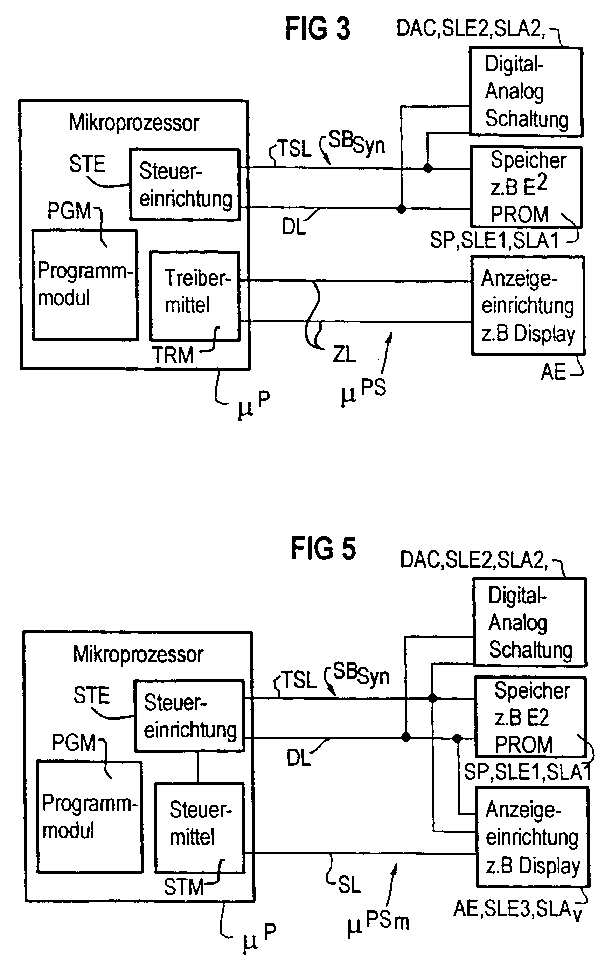

FIGUR 3 zeigt ein synchrones Mikroprozessorsystem µPS, bei dem beispielsweise der Mikroprozessor µP nach FIGUR 2 über einen synchronen Systembus SB_{syn} zur Datenübertragung mit externen peripheren Einrichtungen verbunden ist. Die externen Einrichtungen sind z. B. ein als E² PROM ausgebildeter Speicher SP und eine Digital-Analog-Schaltung DAC (**D**igital **A**nalog **C**ircuit). Auf die an sich bekannte Funktion dieser externen Einrichtungen in Verbindung mit dem Mikroprozessor µP wird nicht weiter eingegangen.

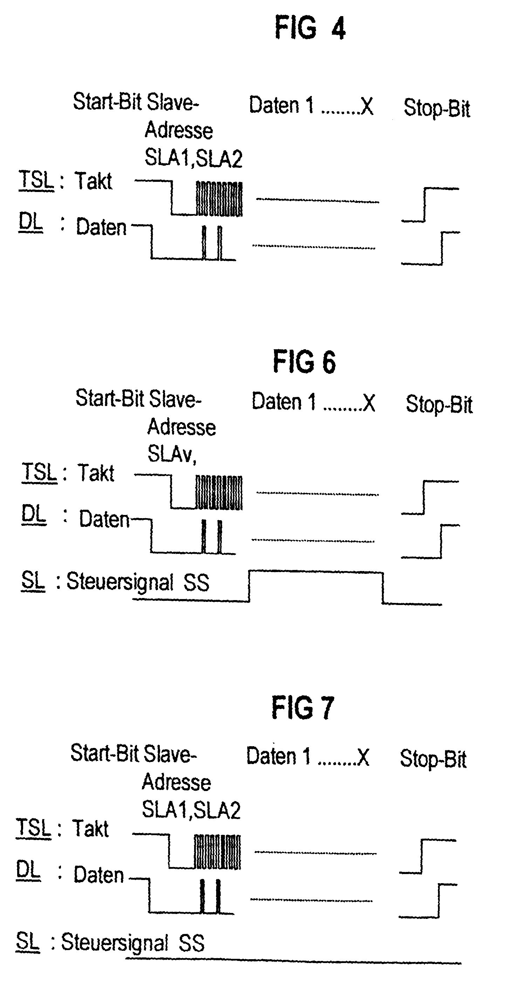

Die Übertragung der Daten (Adressierungs- und Nutzdaten) zwischen dem Mikroprozessor µP und den externen Einrichtungen SP, DAC auf dem synchronen Systembus SB_{syn} erfolgt zeitlich synchronisiert bzw. nach einem vorgegebenen Datenübertragungstakt. Der Systembus SB_{syn} weist hierfür zwei Leitungen, eine Taktsignalleitung TSL und eine Datenleitung DL, auf. Die Daten werden dabei nach einem vereinbarten systemspezifischen Protokoll übertragen, das prinzipiell frei wählbar ist. Im vorliegenden Fall ist dieses Protokoll gemäß der Druckschrift Funk-Technik 39 (1984), Heft 4, Seiten 162 bis 166; Schmidt, W. P.: "Bussysteme-Verbindungen zwischen Zentral- und Peripherieschaltungen" das I²C-Protokoll, bei dem gemäß FIGUR 4 ein START-Bit, eine einrichtungsspezifische Adresse, die Daten und ein STOP-Bit in der genannten Reihenfolge übertragen werden. Für diese protokollspezifische Übertragung der Daten weist der Mikroprozessor µP eine Steuereinrichtung STE (Controller) auf, die die Datenübertragung auf den synchronen, infolge des vereinbarten Protokolls als I²C-Bus ausgebildeten Systembus SB_{syn} entsprechend unterstützt.

Die vorstehend beschriebene Anordnung "Mikroprozessor ↔ externe Einrichtungen" kann als eine MASTER-SLAVE-Konfiguration angesehen werden, in der Mikroprozessor µP als MASTER-Einrichtung ME und der Speicher SP als erste Slave-Einrichtung SLE1 mit einer zur Adressierung ersten SLAVE-Adresse SLA1 und die Digital-Analog-Schaltung DAC als zweite SLAVE-Einrichtung SLE2 mit einer zur Adressierung zweiten SLAVE-Adresse SLA2 bezeichnet werden kann. Innerhalb dieser so definierten MASTER-SLAVE-Konfiguration gibt es keine Kompatibilitätsprobleme zwischen "MASTER" und "SLAVE/SLAVES", so daß die beiden SLAVE-Einrichtungen SLE1, SLE2 kompatibel zur MASTER-Einrichtung ME - d. h. systemkompatibel - sind.

FIGUR 4 zeigt die gemäß der I²C-Spezifikation auf der Taktsignalleitung TSL und der Datenleitung DL auftretenden Signalverläufe. Nach dem Übertragen des START-Bits wird die SLAVE-Adresse SLA1, SLA2 gesendet. Diese wird von dem Speicher SP und der Digital-Analog-Schaltung DAC als ihre erkannt, so daß folgerichtig die darauffolgend übertragenen Daten von dem Speicher SP und der Digital-Analog-Schaltung DAC interpretiert/empfangen werden.

Soll nun zusätzlich eine weitere externe (periphere) Einrichtung, z. B. eine als Display ausgebildete Anzeigeeinrichtung AE, dem Mikroprozessor µP zugeordnet werden, die im Sinne der vorstehenden Nomenklatur systeminkompatibel ist, dann war es bisher üblich, diese inkompatible Anzeigeeinrichtung AE über separate Zusatzleitungen ZL zwischen dem Mikroprozessor µP und der Anzeigeeinrichtung AE und programmgestützte Treibermittel TRM mit dem Mikroprozessor µP zu verbinden.

Aus der Druckschrift Electronics/November 3, 1983, Seiten 162 und 163; R. Brawner "Expanding the I/O facilities of the 8051 microcomputer" sind ein Datenübertragungsverfahren und eine Anordnung hierfür beschrieben, bei denen die am Bus angeschlossenen Einrichtungen auf jeweils zugeordneten Steuerleitungen mittels "Chip Select-Informationen" aktiviert werden.

Die der Erfindung zugrundeliegende Aufgabe besteht darin, daß in einem synchronen Mikroprozessorsystem eine in bezug auf die systemspezifische Datenübertragung systeminkompatible Einrichtung mit einrichtungsspezifischen Daten auf einfache Weise, ohne zusätzlichen Hardware-Aufwand am Mikroprozessor beschickt werden kann.

Diese Aufgabe wird durch die in den Patentansprüchen 1 Verfahren und angegebenen 10 Anordnung Merkmale gelöst.

Die der Erfindung zugrundeliegende Idee besteht darin, daß ausgehend von dem in der Beschreibungseinleitung angegebenen Mikroprozessorsystem und dessen technischen Verwendung, insbesondere in drahtlosen Telekommunikationssystemen, bei Datenzugriffen eines Mikroprozessors des Mikroprozessorsystems auf bezüglich Datenübertragungsprotokolle (z. B. I²C-Protokoll) systemkompatible und systeminkompatible periphere Einrichtungen des Mikroprozessors (z. B. einen Speicher, eine Digital-Analog-Schaltung, eine Anzeigeeinrichtung) Daten (Adressierungs- und Nutzdaten) über einen synchronen Systembus dadurch zielgerichtet und dabei kollisionsfrei übertragen werden, daß
1) auf einer separaten Steuerleitung ein z. B. als "Chip Select"-Signal ausgebildetes Steuersignal zur Selektion der systemkompatiblen und systeminkompatiblen externen (peripheren) Einrichtungen des Mikroprozessors übertragen wird und
2) den systemkompatiblen und systeminkompatiblen Einrichtungen jeweils freie Adressen zugeteilt werden.

Dies hat den Vorteil, daß keine zusätzlichen Anschlußkontakte (Pin's) an dem Mikroprozessor (Layout-Vereinfachung im Chip-Design des Mikroprozessors) notwendig sind. Außerdem kann die vorhandene Prozessorperformance optimal ausgenutzt werden.

Weitere vorteilhafte Weiterbildungen der Erfindung sind in den Unteransprüchen angegeben.

Ein Ausführungsbeispiel der Erfindung wird anhand der FIGUREN 5 bis 7 erläutert. Es zeigen:
FIGUR 5 ausgehend von dem bekannten Mikroprozessorsystem nach FIGUR 3 ein modifiziertes Mikroprozessorsystem,
FIGUR 6 die gemäß der I²C-Spezifikation auf der Taktsignalleitung und der Datenleitung nach FIGUR 5 auftretenden Signalverläufe für die Datenübertragung zwischen Mikroprozessor und Anzeigeeinrichtung,
FIGUR 7 die gemäß der I²C-Spezifikation auf der Taktsignalleitung und der Datenleitung nach FIGUR 5 auftretenden Signalverläufe für die Datenübertragung zwischen Mikroprozessor und Speicher bzw. Digital-Analog-Schaltung.

FIGUR 5 zeigt ausgehend von dem Mikroprozessorsystem µPS nach FIGUR 3 ein modifiziertes Mikroprozessorsystem µPSₘ, bei dem die systeminkompatible Anzeigeeinrichtung AE nach FIGUR 3, wie der systemkompatible Speicher SP und die systemkompatible Digital-Analog-Schaltung DAC nach FIGUR 3, über den synchronen Systembus SB_{syn} und zusätzlich über eine einzige Steuerleitung SL mit dem Mikroprozessor µP verbunden ist. Auf diese Weise können die in dem bekannten Mikroprozessorsystem µPS nach FIGUR 3 notwendigen programmgestützten Treibermittel TRM in dem Mikroprozessor µP entfallen und die Zusatzleitungen ZL durch die einzige Steuerleitung SL ersetzt werden.

Für den einwandfreien Betrieb des modifizierten Mikroprozessorsystem µPsₘ müssen jedoch auf dem synchronen Systembus SB_{syn} die nachfolgenden Bedingungen eingehalten werden:
a) Zugriffe durch den Mikroprozessor µP auf die systemkompatible/n Einrichtung/en (Speicher SP, Digital-Analog-Schaltung DAC) dürfen von der systeminkompatiblen Einrichtung (Anzeigeeinrichtung AE), die als dritte SLAVE-Einrichtung SLE3 bezeichnet wird, nicht interpretiert werden bzw. nicht interpretierbar sein.
b) Zugriffe durch den Mikroprozessor µP auf die systeminkompatible/n Einrichtung/en (Anzeigeeinrichtung AE) dürfen die systemkompatiblen Einrichtungen (Speicher SP, Digital-Analog-Schaltung DAC) nicht stören.

Um diese beiden Bedingungen zu erfüllen, enthält der Mikroprozessor µP der Steuereinrichtung STE zugeordnete Steuermittel STM, die derart ausgebildet sind, daß eine bezüglich der Zugriffe zielgerichtete und dabei kollisionsfreie Datenübertragung möglich ist. Dies geschieht daurch, daß
1) auf der Steuerleitung SL ein z. B. als "Chip Select"-Signal ausgebildetes Steuersignal SS zur Selektion der systemkompatiblen und systeminkompatiblen externen (peripheren) Einrichtungen des Mikroprozessors µP übertragen wird und
2) der/den systeminkompatiblen Einrichtung/en eine freie virtuelle SLAVE-Adresse SLAᵥ/freie virtuelle SLAVE-Adressen SLAᵥ zugeteilt wird/werden, die den anderen Einrichtungen noch nicht zugeteilt worden ist/sind.

Die Steuermittel STM benötigen im Unterschied zu den Treibermittel TRM nach FIGUR 3 keine zusätzlichen Anschlußkontakte (Pin's) an dem Mikroprozessor µP (Layout-Vereinfachung im Chip-Design des Mikroprozessors). Außerdem kann die vorhandene Steuereinrichtung STE genutzt werden (optimale Ausnutzung der vorhandenen Prozessorperformance).

FIGUR 6 zeigt ausgehend von FIGUR 4 die gemäß der I²C-Spezifikation auf der Taktsignalleitung TSL und der Datenleitung DL nach FIGUR 5 auftretenden Signalverläufe für die Datenübertragung zwischen Mikroprozessor µP und Anzeigeeinrichtung AE. Nach dem Übertragen des START-Bits wird die virtuelle SLAVE-Adresse SLAᵥ gesendet. Diese wird von dem Speicher SP und der Digital-Analog-Schaltung DAC nicht als ihre erkannt, so daß folgerichtig die darauffolgend übertragenen Daten von dem Speicher SP und der Digital-Analog-Schaltung DAC nicht interpretiert/empfangen werden. Wird nach der Übertragung der virtuellen SLAVE-Adresse SLAᵥ und vor der Datenübertragung auf der Steuerleitung SL das Steuersignal SS gesendet (Setzen des "Chip Select"-Signals auf HIGH-Potential), so wird dadurch die systeminkompatible Anzeigeeinrichtung AE für den Empfang der auf dem Systembus SB_{syn} anschließend übertragenen Daten aktiviert.

FIGUR 7 zeigt ausgehend von FIGUR 4 die gemäß der I²C-Spezifikation auf der Taktsignalleitung TSL und der Datenleitung DL nach FIGUR 5 auftretenden Signalverläufe für die Datenübertragung zwischen Mikroprozessor µP und Speicher SP bzw. Digital-Analog-Schaltung DAC. Das Ansprechen des systemkompatiblen Speichers SP bzw. der systemkompatiblen Digital-Analog-Schaltung DAC erfolgt wie in FIGUR 4. Dadurch, daß auf der Steuerleitung SL das Steuersignal SS nicht gesendet wird ("Chip Select"-Signal auf LOW-Potential), wird die systeminkompatible Anzeigeeinrichtung AE nicht aktiviert. Die anschließend übertragenen Daten auf der Taktsignalleitung TSL und der Datenleitung DL werden deshalb nicht von der Anzeigeeinrichtung AE interpretiert bzw. empfangen.

## Patentansprüche

1. Verfahren zum Übertragen von systemspezifischen Daten in einem synchronen Mikroprozessorsystem, bei dem
a) zwischen dem Mikroprozessor (µP) und mindestens einer systemkompatiblen systemspezifischen Einrichtung (SP, DAC) sowie mindestens einer systeminkompatiblen systemspezifischen Einrichtung (AE) Adressierungsdaten (SS, SLA1, SLA2, SLAᵥ) und Nutzdaten auf einer ersten Leitung (DL) und Taktsignale auf einer zweiten Leitung (TSL) übertragen werden, wobei diese beiden Leitungen (DL, TSL) zusammen einen Systembus (SB_{syn}) bilden,
b) für die systemkompatible Einrichtung (SP, DAC) bestimmte erste Adressierungsdaten (SLA1, SLA2) und erste Nutzdaten auf der ersten Leitung (DL) übertragen werden, und
c) für die systeminkompatible Einrichtung (AE) bestimmte zweite Adressierungsdaten (SLAᵥ) und zweite Nutzdaten auf der ersten Leitung (DL) und ebenfalls für die systeminkompatible Einrichtung (AE) bestimmte dritte Adressierungsdaten (SS) auf einer Steuerleitung (SL) zwischen dem Mikroprozessor (µP) und der systeminkompatiblen Einrichtung (AE) übertragen werden, wobei
d) der systemkompatiblen Einrichtung (SP, DAC) und der systeminkompatiblen Einrichtung (AE) jeweils freie Adressen zugeteilt werden.

2. Verfahren nach Anspruch 1, **dadurch gekennzeichnet,** daß die ersten Adressierungsdaten (SLA1, SLA2), die zweiten Adressierungsdaten (SLAᵥ), die ersten Nutzdaten und die zweiten Nutzdaten nach dem I²C-Protokoll auf einem I²C-Bus übertragen werden.

3. Verfahren nach Anspruch 1 oder 2, **dadurch gekennzeichnet,** daß die dritten Adressierungsdaten (SS) 'Chip Select-Informationen' sind.

4. Verfahren nach einem der Ansprüche 1 bis 3, **dadurch gekennzeichnet,** daß die systemkompatible Einrichtung (SP, DAC) ein E² PROM ist.

5. Verfahren nach einem der Ansprüche 1 bis 4, **dadurch gekennzeichnet,** daß die systeminkompatible Einrichtung (AE) eine optische Anzeigeeinrichtung ist.

6. Verwendung des Verfahrens nach einem der Ansprüche 1 bis 5 in einem Schnurlos-Handapparat eines Schnurlos-Telekommunikationssystems, das nach dem DECT/GAP-Standard funktioniert.

7. Verwendung des Verfahrens nach einem der Ansprüche 1 bis 5 in einer Schnurlos-Basisstation eines Schnurlos-Telekommunikationssystems, das nach dem DECT/GAP-Standard funktioniert.

8. Verwendung des Verfahrens nach einem der Ansprüche 1 bis 5 in einem Mobilfunk-Handapparat eines Mobilfunk-Telekommunikationssystems, das nach dem GSM-Standard funktioniert.

9. Verwendung des Verfahrens nach einem der Ansprüche 1 bis 5 in einer Mobilfunk-Basisstation eines Mobilfunk-Telekommunikationssystems, das nach dem GSM-Standard funktioniert.

10. Anordnung zum Übertragen von systemspezifischen Daten in einem synchronen Mikroprozessorsystem, mit
a) einem Mikroprozessor (µP) und mindestens einer systemkompatiblen systemspezifischen Einrichtung (SP, DAC) sowie mindestens einer systeminkompatiblen systemspezifischen Einrichtung (AE), zwischen denen Adressierungsdaten (SS, SLA1, SLA2, SLAᵥ) und Nutzdaten übertragen werden,
b) einem Systembus (SB_{syn}) zwischen dem Mikroprozessor (µP) und der systemkompatiblen Einrichtung (SP, DAC) sowie der systeminkompatiblen Einrichtung (AE), auf dem für die systemkompatible Einrichtung (SP, DAC) bestimmte erste Adressierungsdaten (SLA1, SLA2) und erste Nutzdaten und für die systeminkompatible Einrichtung (AE) bestimmte zweite Adressierungsdaten (SLAᵥ) und zweite Nutzdaten auf einer ersten Leitung (DL) und jeweils Taktsignale auf einer zweiten Leitung (TSL) übertragen werden,
c) einer Steuerleitung (SL) zwischen dem Mikroprozessor (µP) und der systeminkompatiblen Einrichtung (AE), auf der ebenfalls für die systeminkompatible Einrichtung (AE) bestimmte dritte Adressierungsdaten (SS) übertragen werden,
d) wobei der systemkompatiblen Einrichtung (SP, DAC) und der systeminkompatiblen Einrichtung (AE) jeweils freie Adressen zugeteilt werden.

11. Anordnung nach Anspruch 10, **dadurch gekennzeichnet,** daß der Systembus (SB_{syn}) als I²C-Bus ausgebildet ist, auf dem die ersten Adressierungsdaten (SLA1, SLA2), die zweiten Adressierungsdaten (SLAᵥ), die ersten Nutzdaten und die zweiten Nutzdaten nach dem I²C-Protokoll übertragen werden.

12. Anordnung nach Anspruch 10 oder 11, **dadurch gekennzeichnet,** daß die dritten Adressierungsdaten (SS) 'Chip Select-Informationen' sind.

13. Anordnung nach einem der Ansprüche 10 bis 12, **dadurch gekennzeichnet,** daß die systemkompatible Einrichtung (SP) als E² PROM ausgebildet ist.

14. Anordnung nach einem der Ansprüche 10 bis 13, **dadurch gekennzeichnet,** daß die systeminkompatible Einrichtung (AE) als optische Anzeigeeinrichtung ausgebildet ist.

15. Verwendung der Anordnung nach einem der Ansprüche 10 bis 14 in einem Schnurlos-Handapparat eines Schnurlos-Telekommunikationssystems, das nach dem DECT/GAP-Standard aufgebaut ist.

16. Verwendung der Anordnung nach einem der Ansprüche 10 bis 14 in einer Schnurlos-Basisstation eines Schnurlos-Telekommunikationssystems, das nach dem DECT/GAP-Standard aufgebaut ist.

17. Verwendung der Anordnung nach einem der Ansprüche 10 bis 14 in einem Mobilfunk-Handapparat eines Mobilfunk-Telekommunikationssystems, das nach dem GSM-Standard aufgebaut ist.

18. Verwendung der Anordnung nach einem der Ansprüche 10 bis 14 in einer Mobilfunk-Basisstation eines Mobilfunk-Telekommunikationssystems, das nach dem GSM-Standard aufgebaut ist.

## Claims

1. Method for transmitting system-specific data in a synchronous microprocessor system, in which
a) addressing data (SS, SLA1, SLA2, SLAᵥ) and user data are transmitted between the microprocessor (µP) and at least one system-compatible system-specific device (SP, DAC) and at least one system-incompatible system-specific device (AE) on a first line (DL) and clock signals are transmitted on a second line (TSL), these two lines (DL, TSL) together forming a system bus (SB_{syn}),
b) first addressing data (SLA1, SLA2) and first user data intended for the system-compatible device (SP, DAC) are transmitted on the first line (DL), and
c) second addressing data (SLAᵥ) and second user data intended for the system-incompatible device (AE) are transmitted on the first line (DL), and third addressing data (SS) likewise intended for the system-incompatible device (AE) are transmitted on a control line (SL) between the microprocessor (µP) and the system-incompatible device (AE),
d) the system-compatible device (SP, DAC) and the system-incompatible device (AE) each being assigned free addresses.

2. Method according to Claim 1, characterized in that the first addressing data (SLA1, SLA2), the third addressing data (SLAᵥ), the first user data and the second user data are transmitted on an I²C bus in accordance with the I²C protocol.

3. Method according to Claim 1 or 2, characterized in that the second addressing data (SS) are 'chip select information'.

4. Method according to one of Claims 1 to 3, characterized in that the system-compatible device (SP, DAC) is an E²PROM.

5. Method according to one of Claims 1 to 4, characterized in that the system-incompatible device (AE) is a visual display device.

6. Application of the method according to one of Claims 1 to 5 in a cordless handset of a cordless telecommunications system which operates in accordance with the DECT/GAP standard.

7. Application of the method according to one of Claims 1 to 5 in a cordless base station of a cordless telecommunications system which operates in accordance with the DECT/GAP standard.

8. Application of the method according to one of Claims 1 to 5 in a mobile radio handset of a mobile radio telecommunications system which operates in accordance with the GSM standard.

9. Application of the method according to one of Claims 1 to 5 in a mobile radio base station of a mobile radio telecommunications system which operates in accordance with the GSM standard.

10. Arrangement for transmitting system-specific data in a synchronous microprocessor system, comprising
a) a microprocessor (µP) and at least one system-compatible system-specific device (SP, DAC) and at least one system-incompatible system-specific device (AE), between which devices addressing data (SS, SLA1, SLA2, SLAᵥ) and user data are transmitted,
b) a system bus (SB_{syn}) between the microprocessor (µP) and the system-compatible device (SP, DAC) and also the system-incompatible device (AE), on which bus first addressing data (SLA1, SLA2) and first user data intended for the system-compatible device (SP, DAC) are transmitted, and second addressing data (SLAᵥ) and second user data intended for the system-incompatible device (AE) are transmitted on a first line (DL) and clock signals in each case are transmitted on a second line (TSL),
c) a control line (SL) between the microprocessor (µP) and the system-incompatible device (AE), on which control line third addressing data (SS) likewise intended for the system-incompatible device (AE) are transmitted,
d) the system-compatible device (SP, DAC) and the system-incompatible device (AE) each being assigned free addresses.

11. Arrangement according to Claim 10, characterized in that the system bus (SB_{syn}) is constructed as an I²C bus on which the first addressing data (SLA1, SLA2), the third addressing data (SLAᵥ), the first user data and the second user data are transmitted according to the I²C protocol.

12. Arrangement according to Claim 10 or 11, characterized in that the second addressing data (SS) are 'chip select information'.

13. Arrangement according to one of Claims 10 to 12, characterized in that the system-compatible device (SP) is constructed as an E²PROM.

14. Arrangement according to one of Claims 10 to 13, characterized in that the system-incompatible device (AE) is constructed as a visual display device.

15. Use of the arrangement according to one of Claims 10 to 14 in a cordless handset of a cordless telecommunications system which is constructed in accordance with the DECT/GAP standard.

16. Use of the arrangement according to one of Claims 10 to 14 in a cordless base station of a cordless telecommunications system which is constructed in accordance with the DECT/GAP standard.

17. Use of the arrangement according to one of Claims 10 to 14 in a mobile radio handset of a mobile radio telecommunications system which is constructed in accordance with the GSM standard.

18. Use of the arrangement according to one of Claims 10 to 14 in a mobile radio base station of a mobile radio telecommunications system which is constructed in accordance with the GSM standard.

## Revendications

1. Procédé pour la transmission de données spécifiques au système dans un système synchrone à microprocesseur, selon lequel
a) entre le microprocesseur (µP) et au moins un dispositif (SP, DAC) spécifique au système et compatible avec le système ainsi qu'au moins un dispositif (AE) spécifique au système et incompatible avec le système, on transmet des données d'adressage (SS, SLA1, SLA2, SLAᵥ) et des données utiles sur une première ligne (DL) et des signaux d'horloge sur une deuxième ligne (TSL), ces deux lignes (DL, TSL) formant ensemble un bus de système (SB_{syn}),
b) on transmet sur la première ligne (DL) des premières données d'adressage (SLA1, SLA2) destinées au dispositif (SP, DAC) compatible avec le système et des premières données utiles, et
c) on transmet sur la première ligne (DL) des deuxièmes données d'adressage (SLAᵥ) destinées au dispositif (AE) incompatible avec le système et des deuxièmes données utiles et on transmet sur une ligne de commande (SL) entre le microprocesseur (µP) et le dispositif (AE) incompatible avec le système des troisièmes données d'adressage (SS) destinées également au dispositif (AE) incompatible avec le système,
d) des adresses respectivement libres étant attribuées au dispositif (SP, DAC) compatible avec le système et au dispositif (AE) incompatible avec le système.

2. Procédé selon la revendication 1, caractérisé par le fait qu'on transmet les premières données d'adressage (SLA1, SLA2), les deuxièmes données d'adressage (SLAᵥ), les premières données utiles et les deuxièmes données utiles selon le protocole I²C sur un bus I²C.

3. Procédé selon la revendication 1 ou 2, caractérisé par le fait que les troisièmes données d'adressage (SS) sont des informations "Chip Select".

4. Procédé selon l'une des revendications 1 à 3, caractérisé par le fait que le dispositif (SP, DAC) compatible avec le système est une E²PROM.

5. Procédé selon l'une des revendications 1 à 4, caractérisé par le fait que le dispositif (AE) incompatible avec le système est un dispositif de visualisation optique.

6. Utilisation du procédé selon l'une des revendications 1 à 5 dans un combiné sans fil d'un système de télécommunication sans fil qui fonctionne selon le standard DECT/GAP.

7. Utilisation du procédé selon l'une des revendications 1 à 5 dans une station de base sans fil d'un système de télécommunication sans fil qui fonctionne selon le standard DECT/GAP.

8. Utilisation du procédé selon l'une des revendications 1 à 5 dans un combiné de radiocommunication mobile d'un système de radiocommunication mobile qui fonctionne selon le standard GSM.

9. Utilisation du procédé selon l'une des revendications 1 à 5 dans une station de base de radiocommunication mobile d'un système de radiocommunication mobile qui fonctionne selon le standard GSM.

10. Dispositif pour la transmission de données spécifiques au système dans un système synchrone à microprocesseur, comportant
a) un microprocesseur (µP) et au moins un dispositif (SP, DAC) spécifique au système et compatible avec le système ainsi qu'au moins un dispositif (AE) spécifique au système et incompatible avec le système, entre lesquels des données d'adressage (SS, SLA1, SLA2, SLAᵥ) et des données utiles sont transmises,
b) un bus de système (SB_{syn}) entre le microprocesseur (µP) et le dispositif (SP, DAC) compatible avec le système ainsi que le dispositif (AE) incompatible avec le système, bus sur lequel des premières données d'adressage (SLA1, SLA2) destinées au dispositif (SP, DAC) compatible avec le système et des premières données utiles ainsi que des deuxièmes données d'adressage (SLAᵥ) destinées au dispositif (AE) incompatible avec le système et des deuxièmes données utiles sont transmises sur une première ligne (DL) et des signaux d'horloge sont transmis sur une deuxième ligne (TSL),
c) une ligne de commande (SL) entre le microprocesseur (µP) et le dispositif (AE) incompatible avec le système, ligne sur laquelle des troisièmes données d'adressage (SS) destinées également au dispositif (AE) incompatible avec le système sont transmises,
d) des adresses respectivement libres étant attribuées au dispositif (SP, DAC) compatible avec le système et au dispositif (AE) incompatible avec le système.

11. Dispositif selon la revendication 10, caractérisé par le fait que le bus de système (SB_{syn}) est conçu comme un bus I²C sur lequel les premières données d'adressage (SLA1, SLA2), les deuxièmes données d'adressage (SLAv), les premières données utiles et les deuxièmes données utiles sont transmises selon le protocole I²C.

12. Dispositif selon la revendication 10 ou 11, caractérisé par le fait que les troisièmes données d'adressage (SS) sont des informations "Chip Select".

13. Dispositif selon l'une des revendications 10 à 12, caractérisé par le fait que le dispositif (SP) compatible avec le système est conçu comme une E²PROM.

14. Dispositif selon l'une des revendications 10 à 13, caractérisé par le fait que le dispositif (AE) incompatible avec le système est conçu comme un dispositif de visualisation optique.

15. Utilisation du dispositif selon l'une des revendications 10 à 14 dans un combiné sans fil d'un système de télécommunication sans fil qui est structuré selon le standard DECT/GAP.

16. Utilisation du dispositif selon l'une des revendications 10 à 14 dans une station de base sans fil d'un système de télécommunication sans fil qui est structuré selon le standard DECT/GAP.

17. Utilisation du dispositif selon l'une des revendications 10 à 14 dans un combiné de radiocommunication mobile d'un système de radiocommunication mobile qui est structuré selon le standard GSM.

18. Utilisation du dispositif selon l'une des revendications 10 à 14 dans une station de base de radiocommunication mobile d'un système de radiocommunication mobile qui est structuré selon le standard GSM.
